# EUROPÄISCHE PATENTSCHRIFT

(11) **EP 3 165 498 B1**
(45) Veröffentlichungstag und Bekanntmachung des Hinweises auf die Patenterteilung: **07.03.2018**
(21) Anmeldenummer: 16197909.1
(22) Anmeldetag: 09.11.2016
(51) Int. Cl.: B67B 3/26

(54) **VORRICHTUNG ZUR INSPEKTION VON DICHTUNGEN VON BÜGELVERSCHLÜSSEN VON BÜGELVERSCHLUSSFLASCHEN**
DEVICE FOR THE INSPECTION OF SEALS OF SWING TOPS OF SWING TOP BOTTLES
DISPOSITIF D'INSPECTION DE JOINTS D'ÉTANCHÉITÉ DE BOUCHONS À ÉTRIER ET BOUTEILLES POURVUES DE TELS BOUCHONS

(30) Priorität: 09.11.2015 DE 202015105997 U
(43) Veröffentlichungstag der Anmeldung: 10.05.2017
(73) Patentinhaber: KS Control GmbH, 93098 Mintraching (DE)
(72) Erfinder: HOFMANN, Tobias, 95131 Schwarzenbach am Wald (DE); Plschek, Klaus, 93086 Wörth (DE); Schneider, Joachim, 93073 Neutraubling (DE); Zierhut, Alexander, 93053 Regensburg (DE)
(74) Vertreter: Glück Kritzenberger Patentanwälte PartGmbB

(56) Entgegenhaltungen:
- EP-A2- 2 784 489
- DE-A1- 4 211 660
- DE-B- 1 043 126

## Beschreibung

Die Erfindung betrifft eine Vorrichtung zur Inspektion von Dichtungen von Bügelverschlüssen von Bügelverschlussflaschen gemäß dem Oberbegriff des Patentanspruches 1.

Bügelverschlussflaschen erfreuen sich in jüngster Vergangenheit einer zunehmenden Beliebtheit. Derartige Bügelverschlussflaschen weisen einen Bügelverschluss bestehend aus einem mehrteiligen Verschlussbügel und einem von diesem aufgenommenen Verschlussstopfen mit einer Dichtung, insbesondere einem Dichtungsgummiring. Der Verschlussstopfen ist hierbei drehgelenkig um eine senkrecht zur Flaschenlängsachse der Bügelverschlussflasche verlaufende Drehachse am mehrteiligen Verschlussbügel vorgesehen.

Der Verschlussbügel weist insbesondere einen Bügelring und einen Bügelarm auf, wobei die freien Enden des Bügelrings zur drehgelenkig Lagerung des Bügelrings im Mündungsbereich der Bügelverschlussflasche in zwei gegenüberliegenden Ausnehmungen aufgenommen sind. Der Bügelring bildet ferner eine Aufnahme für die freien Enden des Bügelarmes aus, und zwar sind diese in zwei ringartig ausgebildeten Bügelabschnitten des Bügelringes drehgelenkig aufgenommen. Der Bügelarm nimmt den Verschlussstopfen mit Dichtungsgummiring auf, und zwar ist hierzu ein gerader Bügelarmabschnitt durch eine längliche, quer durch den Verschlussstopfen verlaufende Bohrung geführt. Der Verschlussstopfen ist vorzugsweise aus einem keramischen Material hergestellt, wobei dessen unterer Stopfenabschnitt zur Aufnahme des Dichtungsgummiringes ausgebildet ist. Über den mehrteiligen, vorzugsweise aus Metall, insbesondere einem Metalldraht hergestellten Verschlussbügel wird der Verschlussstopfen mit dem Dichtungsgummiring auf die Öffnung der Flaschenmündung gepresst und damit ein luft- und flüssigkeitsdichter Verschluss der Flasche erreicht.

Derartige Bügelverschlussflaschen sind vorzugsweise als Mehrwegflaschen ausgebildet. Vor einem erneuten Befüllen sind diese zu reinigen. Hierzu werden die leeren Bügelverschlussflaschen mit geöffnetem Bügelverschluss einer Flaschenreinigungsanlage zugeführt. Vor einem erneuten Befüllen ist insbesondere eine Inspektion der Dichtung bzw. des Dichtungsgummiringes erforderlich, um eine Beschädigung dessen ausschließen zu können.

Aus dem Stand der Technik sind hierzu bereits unterschiedliche Vorrichtungen und Verfahren zur Inspektion von Dichtungen des Verschlussstopfens von derartigen Bügelverschlussflaschen bekannt geworden, beispielsweise aus der DE 10 2010 050 207 A1. Bei derartigen Vorrichtungen werden die Bügelverschlussflaschen mittels einer Transportvorrichtung einer Dreh- und/oder Positioniervorrichtung zugeführt und nach einer ggf. erforderlichen Ausrichtung der Bügelverschlussflaschen an eine Inspektionsvorrichtung befördert. Mittels mehrerer ortsfest montierter Führungselemente wird aufgrund der Transportbewegung der Bügelverschlussflaschen der Verschlussbügel einer Zwangsführung unterzogen. Hierzu wird der frei hängende Verschlussbügel durch ein mehrteiliges Führungselement entlang mehrerer Führungsbahnen geführt und nach Erreichen einer vorgegebenen Inspektionsposition mittels der eine Beleuchtung und ein Kamerasystem aufweisenden Inspektionsvorrichtung untersucht. Nachteilig ist bei den bekannten Vorrichtungen das Aufgreifen des nach unten hängenden und an der Außenseite der Bügelverschlussflasche anliegenden Bügelverschlusses mittels eines mechanischen Führungselementes, insbesondere bei nicht optimal ausgerichteten Bügelverschlussflaschen häufig fehlerhaft.

Auch ist aus der EP 2 784 489 A2 eine Vorrichtung zur Inspektion von Dichtungen von Bügelverschlüssen von Bügelverschlussflaschen gemäß dem Oberbegriff des Anspruchs 1 bekannt, bei der die Mittel zum Ausrichten des Bügelverschlusses für die Inspektion der Dichtungen durch Magnetisierungsvorrichtungen gebildet sind. Nachteilig ist hierbei jedoch eine mit der Magnetisierungsvorrichtungen zumindest abschnittsweise überlappende Wendeleiste vorgesehen, mittels der nach Aufnahme des angehobenen Bügelverschlusses eine Drehung dessen um ca. 180° erfolgt, um eine Inspektion der Dichtung des Bügelverschlusses mittels einer über der Bügelverschlussflasche bzw. dem Bügelverschluss angeordneten Kameraeinheit, d.h. die Dichtung des Bügelverschlusses weist in der Inspektionsposition bezogen auf die Bügelverschlussflasche nach oben. Durch die erforderliche Drehung um 180° ist die Vorbereitung des Verschlusses zur Inspektion zeitaufwendig, so dass nur eine beschränkte Anzahl von Bügelverschlussflaschen in einem vorgegebenen Zeitraum inspiziert werden können.

Ausgehend vom genannten Stand der Technik liegt daher der Erfindung die Aufgabe zugrunde, eine Vorrichtung zur Inspektion von Dichtungen von Bügelverschlüssen von Bügelverschlussflaschen aufzuzeigen, welche die vorgenannten Nachteile beseitigt, insbesondere eine im Vergleich zum Stand der Technik erhöhte Inspektionsgeschwindigkeit ermöglicht. Die Aufgabe wird durch eine Vorrichtung gemäß dem Patentanspruch 1 gelöst.

Der wesentliche Aspekt der erfindungsgemäßen Vorrichtung ist darin zu sehen, dass eine Führungsschiene mit einer bahnförmigen Führungsfläche vorgesehen ist, dass die bahnförmigen Führungsfläche sich in Förderrichtung erstreckt, in Richtung der Transportebene weist und als Anlagefläche für die ebene Oberseite des über die erste Magnetkraft angehobenen Verschlusstopfens dient, und dass die bahnförmige Führungsfläche zumindest einen Inspektionsflächenabschnitt aufweist, der mit der Transportebene einen Winkel zwischen 15° und 45°, vorzugsweise zwischen 18° und 25° einschließt. Vorteilhaft ist bei der erfindungsgemäßen Inspektionsvorrichtung lediglich eine geringe Drehung des Verschlussstopfens aus der angehobenen und hängenden Position nach außen erforderlich, um eine Inspektion der Dichtung des Verschlussstopfens durchzuführen. Hierdurch kann die zur Bereitstellung der Dichtung in der Inspektionsposition erforderliche Zeitdauer erheblich reduziert werden, so dass die Durchsatzrate der Inspektionsvorrichtung deutlich erhöht werden kann.

Weiterhin vorteilhaft ist die erste Magnetkraft zum Ausrichten des Bügelverschlusses entlang einer näherungsweise senkrecht zur Flaschenlängsachse verlaufenden Ebene ausgebildet.

Weiterhin vorteilhaft ist die Inspektionsvorrichtung zur Inspektion der an einem Verschlusstopfen des Bügelverschlusses vorgesehenen Dichtung unterhalb der Führungsschiene und/oder seitlich von der Transportvorrichtung angeordnet ist. Dadurch wird ein kompakter Aufbau der Inspektionsvorrichtung ermöglicht. Auch ist durch die bezogen auf die Transportebene schräge Anordnung der Inspektionsvorrichtung eine schnelle Bildaufnahme möglich, der Verschlussstopfen wird besonders vorteilhaft lediglich in der Inspektionsposition in den Inspektions- bzw. Aufnahmebereich der Inspektionsvorrichtung gekippt bzw. gedreht.

Ebenfalls vorteilhaft ist zumindest eine Fördervorrichtung mit Mittel zum Fördern der Bügelverschlussflasche entlang der Förderrichtung und/oder Drehen der Bügelverschlussflasche um ihre Flaschenlängsachse vorgesehen ist. Diese stellt eine sichere Fixierung der Bügelverschlussflasche während der Inspektion sicher.

Die Führungsschiene ist vorteilhaft zum Drehen des Verschlussstopfens bei der Förderung entlang der Förderrichtung um eine näherungsweise senkrecht zur Förderrichtung verlaufenden Drehachse ausgebildet.

Auch kann einlaufseitig eine weitere Inspektionsvorrichtung zur Ermittlung der Drehposition der der Fördervorrichtung zugeführten Bügelverschlussflasche bezogen auf die Förderrichtung vorgesehen sein, die ggf. mit der Fördervorrichtung oder einer weiteren vorgeschalteten Einrichtung zum Drehen der Bügelverschlussflasche um die Flaschenlängsachse zusammenwirkt.

In einer bevorzugten Ausführungsvariante weist die Führungsschiene eine Vielzahl von entlang der Förderrichtung in der Führungsschiene aufgenommenen weiteren Magnetisierungseinrichtungen zur Erzeugung einer zweiten Magnetkraft auf, die zum Halten des an der bahnförmigen Führungsfläche anliegenden Verschlusstopfens dient. Hierdurch wird eine sichere Führung des jeweiligen Verschlussstopfens entlang der bahnförmigen Führungsfläche gewährleistet.

Die bahnförmige Führungsfläche der Führungsschiene weist weiterhin vorteilhaft zumindest einen Zuführungsabschnitt, einen ersten Wendeabschnitt, den Inspektionsabschnitt sowie einen zweiten Wendeabschnitt aufweist. Es versteht sich, dass auch eine unterschiedliche Aufteilung der bahnförmigen Führungsfläche gewählt werden kann, um den Verschlussstopfen in die gewünschte Inspektionsposition zu drehen. In einer vorteilhaften Ausführungsvariante ist der der Zuführungsabschnitt eben ausgebildet und/oder verläuft in Förderrichtung schräg zur Transportebene. Der Inspektionsabschnitt ist ebenfalls eben ausgebildet und der mit der Transportebene eingeschlossene Winkel öffnet sich hierbei nach außen, d.h. von der Transportstrecke weg. Der erste und zweite Wendeabschnitt bilden eine gewendelte Anlagefläche, die sich um eine parallel zur Förderrichtung verlaufende Achse wendelt.

Die Magnetisierungseinrichtungen können durch einen oder mehrere Einzelmagnete, insbesondere Permanentmagnete oder Elektromagnete gebildet sein, wobei die Führungsschiene vorzugsweise in Förderrichtung im Anschluss an die Magnetisierungseinrichtung angeordnet ist.

In einer vorteilhaften Ausführungsvariante erstreckt sich Fördervorrichtung über die Magnetisierungseinrichtung und die daran anschließende Führungsschiene in Förderrichtung. Die Ausdrucke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen. Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: eine schematische Seitenansicht einer Bügelverschlussflasche,
- Fig. 2: eine schematische Draufsicht auf eine erfindungsgemäße Vorrichtung zur Inspektion von Bügelverschlussflaschen,
- Fig. 3: eine schematische Seitenansicht der erfindungsgemäßen Vorrichtung zur Inspektion von Bügelverschlussflaschen gemäß Figur 2,
- Fig. 4: eine weitere schematische Seitenansicht in Förderrichtung auf eine in der Vorrichtung in der Inspektionsposition befindliche Bügelverschlussflasche und
- Fig. 5a,b: eine schematische Seitenansicht auf die Führungsschiene sowie eine schematische Draufsicht auf die Führungsfläche.

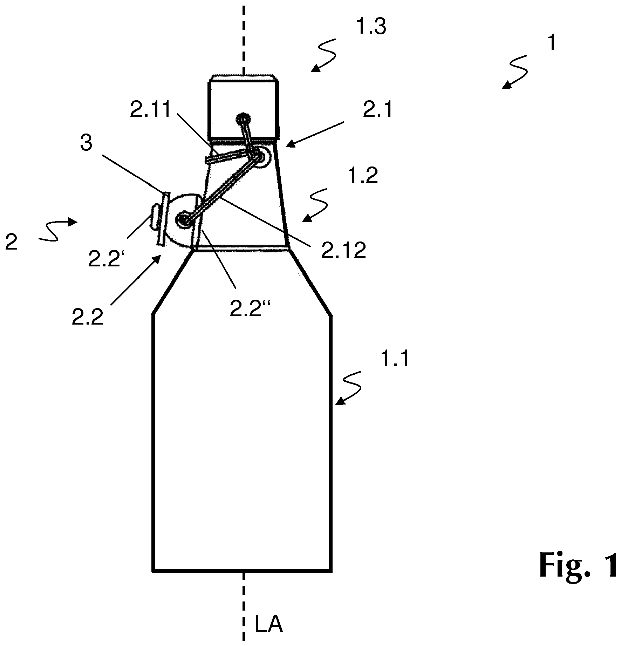

In Figur 1 ist beispielhaft eine Bügelverschlussflasche 1 in einer schematischen Seitenansicht dargestellt. Die Bügelverschlussflasche 1 besteht aus einem Flaschenkörper 1.1, einem Flaschenhals 1.2 und einer Flaschenmündung 1.3, wobei unterhalb der Flaschenmündung 1.3 ein Bügelverschluss 2 angeordnet ist, der sich im geöffneten Zustand in nach unten hängender Weise entlang dem Flaschenhals 1.2 erstreckt. Hierbei liegt der Bügelverschluss 2 an der Außenseite der Bügelverschlussflasche 1 an.

Der Bügelverschluss 2 umfasst beispielsweise einen mehrteiligen Verschlussbügel 2.1 aus Metall oder einer Metalllegierung und einem Verschlussstopfen 2.2, welcher mit einer Dichtung 3, vorzugsweise einem Dichtungsgummiring versehen ist. Der Verschlussbügel 2.1 weist einen Bügelring 2.11 und einen Bügelarm 2.12 zur drehbaren Halterung des Verschlussstopfens 2.2 auf. Die freien Enden des Bügelringes 2.11 sind zur drehgelenkigen Lagerung des Bügelverschlusses 2 im Bereich der Flaschenmündung 1.3 in zwei gegenüberliegenden, nach außen geöffnete Ausnehmungen in der Bügelverschlussflasche 1 aufgenommen.

Der Bügelring 2.11 bildet ferner eine Aufnahme für die freien Enden des Bügelarmes 2.12 aus, und zwar weist dieser hierzu zwei näherungsweise ringförmige Bügelabschnitte aus, in denen die freien Enden des Bügelarmes 2.12 aufgenommen sind bzw. darin drehbar gelagert sind. Die drehbare Lagerung des Verschlussbügels 2.1 bzw. dessen Bügelring 2.11 und Bügelarm 2.12 erfolgt jeweils um eine näherungsweise senkrecht zur Flaschenlängsachse LA verlaufende Drehachse. Ebenfalls ist der Verschlussstopfen 2.2 am Bügelarm 2.12 um eine senkrecht zur Flaschenlängsachse LA verlaufende Drehachse drehbar gehaltert. Der Verschlussstopfen 2.2 ist vorzugsweise aus einem keramischen Material oder aus einem Kunststoffmaterial hergestellt und weist zur Aufnahme des ringförmig ausgebildeten Dichtungsringes 3 einen entsprechend geformten Nasenabschnitt auf.

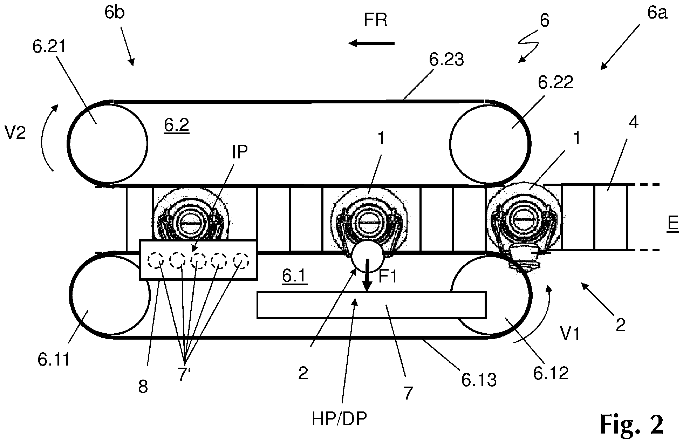

Figur 2 zeigt eine schematische Draufsicht auf die erfindungsgemäße Vorrichtung zur Inspektion der Dichtung 3 des Bügelverschlusses 2 einer Bügelverschlussflasche 1. Die erfindungsgemäße Vorrichtung weist zumindest eine Transportvorrichtung 4 zum Transport der Bügelverschlussflaschen 1 in einer Transportebene E und entlang zumindest einer Förderrichtung FR und zumindest eine Fördervorrichtung 6 mit Mittel zum Drehen der Bügelverschlussflasche 1 um deren Flaschenlängsachse LA und/oder Fördern der Bügelverschlussflasche 1 in Förderrichtung FR auf. In den Figuren ist lediglich ein Abschnitt der Transportvorrichtung 4 schematisch dargestellt, welcher vorzugweise in Form eines Transporteurs realisiert ist.

Die Bügelverschlussflaschen 1 werden über die Transportvorrichtung 4 der Fördervorrichtung 6 zugeführt, vorzugsweise bereits in einem ausgerichteten Zustand, in dem der Bügelverschluss 2 der Bügelverschlussflasche 1 senkrecht zur Förderrichtung FR orientiert am Flaschenkörper 1.1 der Bügelverschlussflasche 1 an der Außenseite hängender Weise anliegt.

Hierbei erstreckt sich die Transportvorrichtung 4 bzw. der Transporteur im Bereich der Fördervorrichtung 6 entlang einer Geraden, und zwar in der Transportebene E, und ist zur Förderung der Bügelverschlussflaschen 1 durch oder entlang der Fördervorrichtung 6 ausgebildet. Die Flaschenlängsachse LA der Bügelverschlussflaschen 1 verläuft hierbei vorzugsweise senkrecht zur Transportebene E.

Die Fördervorrichtung 6 weist einen Einlaufbereich 6a und einen Auslaufbereich 6b auf, wobei vorzugsweise im Einlaufbereich 6a eine erste Inspektionsvorrichtung 5 vorgesehen ist, mittels der die Drehposition der Bügelverschlussflasche 1 ermittelt wird. Insbesondere wird darüber die Ausrichtung des Bügelverschlusses 2 einer Bügelverschlussflasche 1 bezogen auf die Förderrichtung FR bestimmt und/oder nochmals überprüft. Im Auslassbereich 6b ist eine zweite Inspektionsvorrichtung 9 vorgesehen, welche zur Inspektion der am Verschlusstopfen 2.2 des Bügelverschlusses 2 vorgesehenen Dichtung 3 ausgebildet ist.

Sowohl die erste als auch die zweite Inspektionsvorrichtung 5, 9 umfassen vorzugsweise ein Kamerasystem sowie eine entsprechende Beleuchtung und sind zur Erfassung von Bildaufnahmen, vorzugsweise in digitaler Form vorgesehen. Es versteht sich, dass die Inspektionsvorrichtungen 5, 9 auch durch alternative Erfassungsvorrichtungen gebildet sein können, mittels denen die Drehposition der Bügelverschlussflaschen 1 bzw. die Beschaffenheit der Dichtung 3 ermittelbar ist ohne das hierdurch der Erfindungsgedanke verlassen wird.

Vorzugsweise ist die erste Inspektionsvorrichtung 5 über der Transportvorrichtung 4 bzw. dem Transporteur angeordnet, und zwar derart, dass die Erfassungsrichtung der ersten Inspektionsvorrichtung 5 in Flaschenlängsachse LA oder im Wesentlichen parallel zur Flaschenlängsachse LA bzw. senkrecht zur Aufnahmeebene verläuft. Über die erste Inspektionsvorrichtung 5 kann eine Draufsicht auf die Bügelverschlussflasche 1 und die Drehposition um deren Flaschenlängsachse LA bezogen auf die Förderrichtung FR ermittelt werden. Die zweite Inspektionsvorrichtung 5 ist seitlich von der Transportvorrichtung 4 bzw. dem Transporteur angeordnet und ist bezogen auf die Transportebene E geneigt angeordnet, d.h. die Längsachse und/oder Erfassungsrichtung der Inspektionsvorrichtung 5 verläuft schräg zur Transportebene E.

Die vorzugsweise über die Transportvorrichtung 4 bzw. dem Transporteur einzeln der Fördervorrichtung 6 zugeführten Bügelverschlussflaschen 1 werden beispielsweise über die Mittel zum Drehen der Bügelverschlussflasche 1 um ihre Flaschenlängsachse LA im oder gegen den Uhrzeigersinn gedreht und somit in eine vorgegebene Drehposition gebracht.

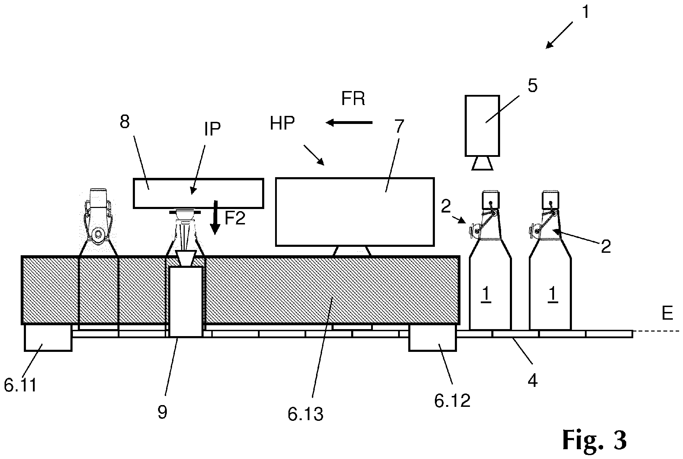

In der in Figur 2 und 3 dargestellten Ausführungsvariante sind die Mittel zum Fördern der Bügelverschlussflaschen 1 entlang der Förderrichtung durch zwei entlang der Transportvorrichtung 4 gegenüberliegend angeordnete Riemenstationen 6.1, 6.2 gebildet, und zwar einer ersten und zweiten Riemenstation 6.1, 6.2. Jede der Riemenstationen 6.1, 6.2 weist zumindest eine Antriebsmotoreinheit 6.11, 6.21 und zumindest eine der jeweiligen Antriebsmotoreinheit 6.11, 6.21 gegenüberliegende Umlenkrolleneinheit 6.21, 6.22 auf, wobei zwischen einer Antriebsmotoreinheit 6.11, 6.21 und einer Umlenkrolleneinheit 6.21, 6.22 ein Antriebsriemen 6.31, 6.32 gespannt ist. Der jeweilige Antriebsriemen 6.31, 6.32 einer Riemenstation 6.1, 6.2 bildet eine vorzugsweise ebene, senkrecht zur Transportebene E verlaufende Antriebsfläche aus, welche sich parallel zur Förderrichtung FR erstreckt. Die Antriebsmotoreneinheiten 6.11, 6.21 können entweder als Schrittmotoreinheiten oder als Servomotoreinheiten ausgebildet sein.

Die beiden gegenüberliegenden Riemenstationen 6.1, 6.2 sind hierbei derart beabstandet zueinander angeordnet, dass diese die in der Positioniervorrichtung 6 befindliche Bügelverschlussflasche 1 im Bereich des Flaschenkörpers 1.3 einklemmen und in Förderrichtung FR mitführen. Vorzugsweise ist die Positioniervorrichtung 6 zur Verarbeitung von Bügelverschlussflaschen 1 mit einem Durchmesser zwischen 60 mm und 80 mm, vorzugsweise 65 mm und 70 mm ausgebildet. Es versteht sich das die erfindungsgemäße Vorrichtung zur Inspektion von Bügelverschlussflaschen 1 keinesfalls auf die Verarbeitung von Bügelverschlussflaschen 1 mit den genannten Durchmessern beschränkt ist, vielmehr ist auch die Verarbeitung von kleineren oder größeren Flaschendurchmessern möglich.

Die Antriebsgeschwindigkeiten V1, V2 der ersten und zweiten Riemenstation 6.1, 6.2 und sind vorzugsweise getrennt voneinander regelbar, und zwar weist die erste Riemenstation 6.1 eine erste Antriebsgeschwindigkeit V1 und die zweite Riemenstation 6.2 eine zweite Antriebsgeschwindigkeit V2 auf. Durch Regelung der Differenzgeschwindigkeit zwischen der ersten und zweiten Antriebsgeschwindigkeit V1, V2 der ersten bzw. zweiten Riemenstation 6.1, 6.2 für eine vorgegebene Zeitdauer ist auch ein gesteuertes Verdrehen der Bügelverschlussflasche 1 um ihre Flaschenlängsachse LA in an sich bekannter Weise möglich.

Überschreitet die erste Antriebsgeschwindigkeit V1 beispielsweise die zweite Antriebsgeschwindigkeit V2, so wird die Bügelverschlussflasche 1 während der Förderung in Förderrichtung FR im Uhrzeigersinn um ihre Flaschenlängsachse LA gedreht. Überschreitet hingegen die zweite Antriebsgeschwindigkeit V2 die erste Antriebsgeschwindigkeit V1, so erfolgt eine Drehung der Bügelverschlussflasche 1 im Gegenuhrzeigersinn während der Förderung in Förderrichtung FR.

Die in der Fördervorrichtung 6 aufgenommene Bügelverschlussflasche 1 weist vorzugsweise eine Drehposition DP auf, in der der Bügelverschluss 2 senkrecht zur Förderrichtung FR in Richtung der ersten Riemenstation 6.1 oder alternativ in Richtung der zweiten Riemenstation 6.2 orientiert ist. In der Drehposition DP ist damit der Bügelverschluss 2 in Draufsicht näherungsweise rechtwinklig zur Förderrichtung FR ausgerichtet.

Erfindungsgemäß weist die Vorrichtung zur Inspektion von Dichtungen 3 eines Bügelverschlusses 2 von Bügelverschlussflaschen 1 eine Magnetisierungseinrichtung 7 auf, die zumindest ein Mittel zum Ausrichten des Bügelverschlusses 2 bildet. Die Magnetisierungseinrichtung 7 kann entweder durch einen Permanentmagneten oder einen Elektromagneten oder eine Kombination aus beiden gebildet sein. Die Magnetisierungseinrichtung 7 ist vorzugsweise zur Erzeugung einer Magnetkraft F von 1000 N bis zu 3000 N eingerichtet. Die Magnetkraft F wirkt zumindest in Richtung der an dieser vorbeigeförderten Bügelverschlussflaschen 1, vorzugsweise auf den Bereich des Flaschenhalses 1.2.

Die Magnetisierungseinrichtung 7 erstreckt sich zumindest abschnittweise entlang der Fördervorrichtung 6, und zwar vorzugsweise parallel zur Förderrichtung FR bzw. Förderebene E und über einen Abschnitt der Fördervorrichtung 6, und zwar einlaufseitig. Damit wird die in der vorgegebenen Drehposition DP befindliche Bügelverschlussflasche 1 mit einem durch die Magnetisierungseinrichtung 7 erzeugten Magnetfeld mit einer ersten Magnetkraft F1 beaufschlagt, welche vorzugsweise auf den Bügelverschluss 2 der Bügelverschlussflasche 1 gerichtet ist. Der Bügelverschluss 2 ist in der Drehposition DP in Richtung der Magnetisierungseinrichtung 7 orientiert und wird in dieser Positionierung bei Beaufschlagen mit der ersten Magnetkraft F1 von der Bügelverschlussflasche 1 abgehoben. Die Bügelverschlussflasche 1 wird hierbei weiterhin durch die Fördervorrichtung 6 im Bereich des Flaschenkörpers 1.1 gehalten.

Die durch die Magnetisierungseinrichtung 7 erzeugte erste Magnetkraft F1 wirkt hierbei näherungsweise senkrecht zur Flaschenlängsachse LA bzw. zumindest in einer die Flaschenlängsachse LA aufnehmenden Ebene auf den Verschlussbügel 2.1 ein. Der im Bereich des Flaschenhalses 1.2 der Bügelverschlussflasche 1 anliegende Bügelverschluss 2 wird durch diese erste Magnetkraft F1 vom Flaschenhals 1.2 abgehoben und in Richtung der Magnetisierungseinrichtung 7 ausgelenkt. Aufgrund der bestehenden ersten Magnetkraft F1 wird der Bügelverschluss 2 in einer näherungsweise senkrecht zur Flaschenlängsachse LA verlaufenden Halteposition HP gehalten. Insbesondere wird der aus Metall hergestellte Verschlussbügel 2.1 nebst Verschlussstopfen 2.2 vom Flaschenkörper 1.1 abgehoben und durch die von der Magnetisierungseinrichtung 7 erzeugten erste Magnetkraft F1 in dieser Halteposition HP entlang der Förderstrecke gehalten. In einer bevorzugten Ausführungsvariante ist die Magnetisierungsvorrichtung 7 entlang und oberhalb der ersten Riemenstation 6.1 angeordnet. Diese befindet sich näherungsweise auf dem Höhenniveau der Bügelverschlüsse 2 des über die Transporteinrichtung 4 geförderten Bügelverschlussflaschen 1. Alternativ oder zusätzlich kann die Magnetisierungsvorrichtung 7 entlang der zweiten Riemenstation 6.2 oder zwei gegenüberliegende Magnetisierungseinrichtungen (nicht in den Figuren dargestellt) vorgesehen sein.

In Förderrichtung FR ist erfindungsgemäß im Auslaufbereich 6b der Fördervorrichtung 6 eine Führungsschiene 8 zur Führung des Verschlussstopfens 2.2 des Bügelverschlusses 2 vorgesehen, die sich in Führungsrichtung FR an die Magnetisierungseinrichtung 7 anschließt. Die Führungsschiene 8 ist zur Zwangsführung des Verschlussstopfens 2.2 des angehoben und in der Halteposition HP befindlichen Verschlussstopfens 2.2 vorgesehen. Hierzu weist die Führungsschiene 8 eine bahnförmige Führungsfläche 10 auf, und zwar ist die bahnförmige Führungsfläche 10 nach unten, d.h. in Richtung der Transportebene E orientiert und an der gegenüberliegenden Oberflächenseite an einer Träger- und Halteeinrichtung (nicht in den Figuren dargestellt) montiert. Die Führungsschiene 8 ist parallel zur Mittenebene der Transportvorrichtung 4, d.h. versetzt zur Flaschenlängsachse LA der darauf beförderten Bügelverschlussflaschen 1 angeordnet, so dass die seitlich angehobenen Bügelverschlüsse bzw. deren Verschlussstopfen 2.2 mit der bahnförmigen Führungsfläche 10 zur Anlage gebracht werden können. Hierbei wird der in Halteposition HP befindliche Verschlussstopfen 2.2 von einem freien Ende der Führungsschiene 8 aufgenommen und entlang der vorgegebenen bahnförmigen Führungsfläche während der Förderung entlang der Förderrichtung FR geführt.

Der Verschlussstopfen 2.2 weist zunächst in der Halteposition HP mit seinem die Dichtung 3 aufnehmenden Nasenabschnitt 2.2' in Richtung der Transportvorrichtung 4. Zur Inspektion dessen ist jedoch eine leichte Drehung des Verschlussstopfens 2.2 um seine senkrecht zur Flaschenlängsachse LA verlaufenden Drehachse am Bügel erforderlich. Hierzu wird der Verschlussstopfen 2.2 mit seiner der Dichtung 3 gegenüberliegenden flachen Oberseite 2.2" von der Führungsschiene 8 mittels der bahnartigen Führungsfläche aufgenommen.

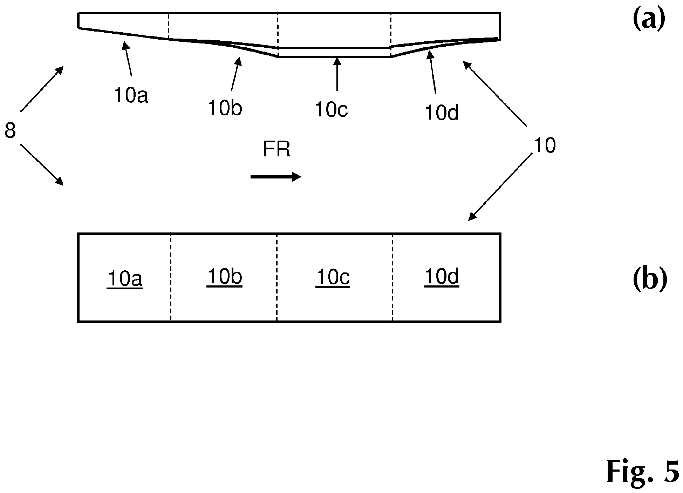

Die bahnförmige Führungsfläche 10 der Führungsschiene 8 weist hierzu beispielsweise zumindest einen Zuführungsabschnitt 10a, eine ersten Wendeabschnitt 10b, einen Inspektionsabschnitt 10c sowie einen zweiten Wendeabschnitt 10d auf, die entlang der Förderrichtung FR aufeinander folgen. In Figur 5a und 5b ist eine schematische Seitenansicht sowie eine schematische Draufsicht auf die bahnförmige Führungsfläche 10 dargestellt, aus der die beschriebene Einteilung in mehrere Abschnitte 10a - 10d entnehmbar ist.

An dieser bahnförmigen Führungsfläche 10 liegt der Verschlussstopfens 2.2 mit seiner flachen Oberseite 2.2" an und wird während der Förderbewegung in Förderrichtung FR in eine Inspektionsposition IP gedreht, und zwar ausgehend von der Halteposition HP. Mittels der bahnartigen Führungsfläche 10 der Führungsschiene 8 wird der Verschlussstopfen 2.2 während der Förderung entlang der Führungsschiene 8 von der Halteposition HP zwischen 15° und 45°, vorzugsweise zwischen 18° und 25° gedreht, d.h. bezogen auf die Transportebene E schließt die flache Oberseite 2.2" des Verschlussstopfens 2.2 einen Winkel w zwischen 15° und 45°, vorzugsweise zwischen 18° und 25° ein. Dies wird durch eine entsprechende Ausbildung der bahnförmigen Führungsfläche 10 erreicht, und zwar schließt der Inspektionsabschnitt 10c, der vorzugsweise eben ausgebildet ist, einen Winkel w zwischen 15° und 45°, vorzugsweise zwischen 18° und 25° mit der Transportebene E ein. Beim Passieren des Inspektionsabschnittes 10c hat der Verschlussstopfen 2.2 die gewünschte Inspektionsposition IP erreicht, in welcher die Dichtung 3 des Verschlussstopfens 2.2 seitlich nach außen weist und damit mit der entsprechend eingerichteten zweiten Inspektionseinrichtung 9 inspiziert werden kann. Hierzu wird in der Inspektionsposition IP von der nach unten weisenden Dichtung 3 mittels der zweiten Inspektionsvorrichtung 9 eine Bildaufnahme erzeugt und diese zur Untersuchung der Dichtung 3 auf Beschädigungen, insbesondere das Vorliegen von Rissen ausgewertet.

Die Führungsschiene 8 weist darüber hinaus zur Erzeugung einer zweiten Magnetkraft F2 weitere Magnetisierungseinrichtungen 7' auf, die beispielsweise durch eine Vielzahl von Einzelmagneten gebildet sein können, die näherungsweise gleichmäßig entlang der Förderrichtung FR in der Führungsschiene 8 aufgenommen sind. In Figur 2 ist beispielshaft eine derartige Anordnung von mehreren Einzelmagneten schematisch angedeutet.

Die weiteren Magnetisierungseinrichtungen 7' sind vorzugsweise in die Führungsschiene 8 integriert oder in der der bahnförmigen Führungsfläche 10 gegenüberliegenden Oberflächenseite der Führungsschiene 8 eingelassen oder vorzugsweise oberflächenbündig eingebettet. Durch die zweite Magnetkraft F2 wird der Verschlusstopfens 2.2 mit seiner flachen Oberseite 2.2" auf die Führungsfläche 10 gezogen, und zwar da die zweite Magnetkraft F2 auf den Verschlussbügel 2.1 einwirkt, und damit eine flächige Anlage zwischen der flachen Oberseite 2.2" und der Führungsfläche 10 hergestellt, so dass eine Zwangsführung des Verschlusstopfens 2.2 durch die Führungsfläche 10 in Förderrichtung FR gegeben ist.

Der Zuführungsabschnitt 10a ist vorzugsweise eben ausgebildet und/oder verläuft schräg zur Transportebene E, und zwar in Bezug auf die Förderrichtung FR. Daran schließt sich der ersten Wendeabschnitt 10b an, dessen Anlagefläche sich um eine parallel zur Förderrichtung FR verlaufende Achse wendelt und damit eine Drehung des Verschlusstopfens 2.2 am Verschlussbügel 2.1 bewirkt. Darauf folgt der vorzugsweise ebene Inspektionsabschnitt 10c, der den beschriebenen Winkel w mit der Transportebene E einschließt und damit eine seitliche Inspektion der Dichtung 3 während der Förderung ermöglicht. Vorteilhaft ist hierzu nur ein Anheben des Bügelverschlusses 2 und ein geringfügiges Drehen des Verschlussstopfens 2.2 erforderlich, um eine Inspektion der daran befindlichen Dichtung 3 in der Inspektionsposition IP zu ermöglichen. Der vorzugsweise ebene Inspektionsabschnitt 10c geht dann in den zweiten Wendeabschnitt 10d über, über welchen der Verschlussstopfen 2.2 wieder in die ursprüngliche hängende Position zurückgedreht wird. Hierzu ist die Anlagefläche des zweiten Wendeabschnittes 10d wiederum um eine parallel zur Förderrichtung FR verlaufende Achse gewendelt.

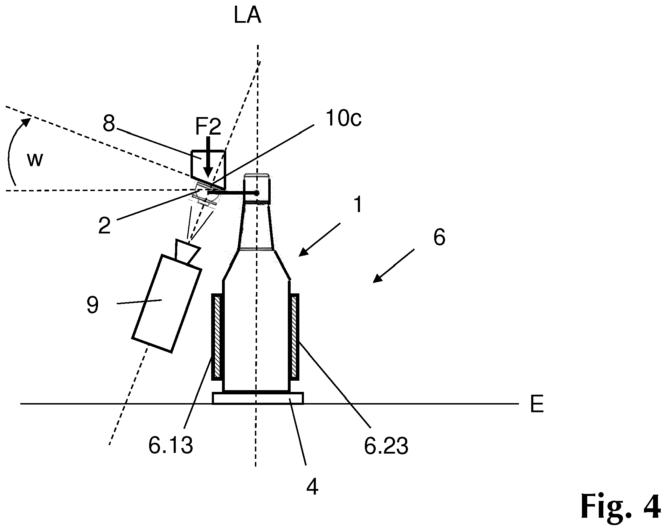

Figur 4 zeigt eine schematische Seitenansicht des in der Inspektionsposition IP befindlichen Verschlussstopfen 2.2, der im Inspektionsabschnitt 10c an der Führungsfläche 10 der Führungsschiene 8 anliegt.

In einer Ausführungsvariante der Erfindung kann der zweiten Inspektionseinrichtung 9 eine weitere Inspektionseinrichtung (nicht in den Figuren dargestellt) zur Erkennung eines auf der flachen Oberseite 2.2" des Verschlussstopfens 2.2 angebrachten Emblems, bespielweise des jeweiligen Getränkeabfüllers, vor- oder nachgeschaltet sein.

Die Erfindung wurde voranstehend an Ausführungsbeispielen beschrieben. Es versteht sich, dass zahlreiche Änderungen sowie Abwandlungen möglich sind.

### Bezugszeichenliste

- 1: Bügelverschlussflasche
- 1.1: Flaschenkörper
- 1.2: Flaschenhals
- 1.3: Flaschenmündung
- 2: Bügelverschluss
- 2.1: Verschlussbügel
- 2.11: Bügelring
- 2.12: Bügelarm
- 2.2: Verschlussstopfen
- 2.2': Nasenabschnitt
- 2.2": flache Oberseite
- 3: Dichtung
- 4: Transportvorrichtung
- 5: erste Inspektionsvorrichtung
- 6: Fördervorrichtung
- 6a: Einlaufbereich
- 6b: Auslaufbereich
- 6.1: erste Riemenstation
- 6.11: erste Antriebsmotoreinheit
- 6.12: erste Umlenkrolleneinheit
- 6.13: erster Antriebsriemen
- 6.2: zweite Riemenstation
- 6.21: zweite Antriebsmotoreinheit
- 6.22: zweite Umlenkrolleneinheit
- 6.23: zweiter Antriebsriemen
- 7: Magnetisierungseinrichtung
- 7': weitere Magnetisierungseinrichtungen
- 8: Führungsschiene
- 9: zweite Inspektionsvorrichtung
- 10: bahnförmige Führungsfläche
- 10a: Zuführungsabschnitt
- 10b: erster Wendeabschnitt
- 10c: Inspektionsabschnitt
- 10d: zweiter Wendeabschnitt

- DP: Drehposition
- E: Transportebene
- F1: erste Magnetkraft
- F2: zweite Magnetkraft
- FR: Förderrichtung
- HP: Halteposition
- IP: Inspektionsposition
- LA: Flaschenlängsachse
- V1: erste Geschwindigkeit
- V2: zweite Geschwindigkeit

## Patentansprüche

1. Vorrichtung zur Inspektion von Dichtungen (3) von Bügelverschlüssen (2) von Bügelverschlussflaschen (1) umfassend eine Transportvorrichtung (4) zum Transport der Bügelverschlussflaschen (1) in zumindest einer Förderrichtung (FR) und einer Transportebene (E), zumindest einer Inspektionsvorrichtung (9) zur Inspektion der an einem Verschlusstopfen (2.2) des Bügelverschlusses (2) vorgesehenen Dichtung (3) sowie eine sich entlang der Förderrichtung (FR) erstreckenden Magnetisierungseinrichtung (7) zur Erzeugung einer auf den Bügelverschluss (2) der Bügelverschlussflasche (1) einwirkenden ersten Magnetkraft (F), wobei mittels der ersten Magnetkraft (F) der Bügelverschluss (2) einer Bügelverschlussflasche (1) seitlich angehoben wird und in einer näherungsweise parallel zur Transportebene (E) verlaufenden Halteebene (E) gehalten wird, wobei eine Führungsschiene (8) mit einer bahnförmigen Führungsfläche (10) vorgesehen ist, wobei die bahnförmige Führungsfläche (10) sich in Förderrichtung (FR) erstreckt, in Richtung der Transportebene (E) weist und als Anlagefläche für die ebene Oberseite (2.2") des über die erste Magnetkraft (F1) angehobenen Verschlusstopfens (2.2) dient,
**dadurch gekennzeichnet, dass** die bahnförmige Führungsfläche (10) zumindest einen Inspektionsflächenabschnitt (10c) aufweist, der mit der Transportebene (E) einen Winkel (w) zwischen 15° und 45°, vorzugsweise zwischen 18° und 25° einschließt.

2. Vorrichtung nach Anspruch 1, **dadurch gekennzeichnet, dass** die erste Magnetkraft (F1) zum Ausrichten des Bügelverschlusses (2) entlang einer näherungsweise senkrecht zur Flaschenlängsachse (LA) verlaufenden Ebene ausgebildet ist.

3. Vorrichtung nach Anspruch 1 oder 2, **dadurch gekennzeichnet, dass** die Inspektionsvorrichtung (9) zur Inspektion der an einem Verschlusstopfen (2.2) des Bügelverschlusses (2) vorgesehenen Dichtung (2) unterhalb der Führungsschiene (8) und/oder seitlich von der Transportvorrichtung (4) angeordnet ist.

4. Vorrichtung nach einem der Ansprüche 1 bis 3, **dadurch gekennzeichnet, dass** zumindest eine Fördervorrichtung (6) mit Mittel zum Fördern der Bügelverschlussflasche (1) entlang der Förderrichtung (FR) und/oder Drehen der Bügelverschlussflasche (1) um ihre Flaschenlängsachse (LA) vorgesehen ist.

5. Vorrichtung nach einem der Ansprüche 1 bis 4, **dadurch gekennzeichnet, dass** die Führungsschiene (8) zum Drehen des Verschlussstopfens (2.2) bei der Förderung entlang der Förderrichtung (FR) um eine näherungsweise senkrecht zur Förderrichtung (FR) verlaufenden Drehachse ausgebildet ist.

6. Vorrichtung nach einem der Ansprüche 1 bis 5, **dadurch gekennzeichnet, dass** einlaufseitig eine weitere Inspektionsvorrichtung (5) zur Ermittlung der Drehposition der der Fördervorrichtung (6) zugeführten Bügelverschlussflasche (1) bezogen auf die Förderrichtung (FR) vorgesehen ist.

7. Vorrichtung nach einem der Ansprüche 1 bis 6, **dadurch gekennzeichnet, dass** die Führungsschiene (8) eine Vielzahl von entlang der Förderrichtung (FR) in der Führungsschiene (8) aufgenommenen weiteren Magnetisierungseinrichtungen (7') zur Erzeugung einer zweiten Magnetkraft (F2) aufweist, die zum Halten des an der bahnförmigen Führungsfläche (10) anliegenden Verschlusstopfens (2.2) dient.

8. Vorrichtung nach einem der Ansprüche 1 bis 7, **dadurch gekennzeichnet, dass** die bahnförmige Führungsfläche (10) der Führungsschiene (8) zumindest einen Zuführungsabschnitt (10a), einen ersten Wendeabschnitt (10b), den Inspektionsabschnitt (10c) sowie einen zweiten Wendeabschnitt (10d) aufweist.

9. Vorrichtung nach Anspruch 8, **dadurch gekennzeichnet, dass** der Zuführungsabschnitt (10a) eben ausgebildet ist und/oder in Förderrichtung (FR) schräg zur Transportebene (E) verläuft.

10. Vorrichtung nach Anspruch 8 oder 9, **dadurch gekennzeichnet, dass** der Inspektionsabschnitt (10c) eben ausgebildet ist und der mit der Transportebene eingeschlossene Winkel (w) sich nach außen öffnet.

11. Vorrichtung nach einem der Ansprüche 8 bis 10, **dadurch gekennzeichnet, dass** der erste und zweite Wendeabschnitt (10b, 10d) eine gewendelte Anlagefläche bilden, die sich um eine parallel zur Förderrichtung (FR) verlaufende Achse wendelt.

12. Vorrichtung nach einem der Ansprüche 7 bis 11, **dadurch gekennzeichnet, dass** die Magnetisierungseinrichtungen (7, 7') durch einen oder mehrere Einzelmagnete, insbesondere Permanentmagnete oder Elektromagnete gebildet sind.

13. Vorrichtung nach einem der Ansprüche 1 bis 12, **dadurch gekennzeichnet, dass** die Führungsschiene (8) in Förderrichtung (FR) im Anschluss an die Magnetisierungseinrichtung (7) angeordnet ist.

14. Vorrichtung nach Anspruch 13, **dadurch gekennzeichnet, dass** sich die Fördervorrichtung (6) über die Magnetisierungseinrichtung (7) und die daran anschließende Führungsschiene (8) in Förderrichtung (FR) erstreckt.

## Claims

1. A device for the inspection of seals (3) of swing tops (2) of swing top bottles (1) comprising a transport device (4) for transporting the swing top bottes (1) in at least one conveying direction (FR) and in a transport plane (E), at least one inspection device (9) for inspecting the seal (3) provided on a plug (2.2) of the swing top (2) as well as a magnetisation means (7) extending along the conveying direction (FR) for generating a first magnetic force (F) acting on the swing top (2) of the swing top bottle (1), wherein the swing top (2) of the swing top bottle (1) is laterally lifted by means of the first magnetic force (F) and held in a holding plane (E) extending approximately parallel to the transport plane (E), wherein a guide rail (8) with a track-shaped guiding surface (10) is provided, wherein the track-shaped guiding surface (10) extends in conveying direction (FR), facing in the direction of the transport plane (E) and serves as a contact surface for the planar upper side (2.2") of the plug (2.2) lifted by the first magnetic force (F1),
**characterised in that** the track-shaped guiding surface (10) comprises at least one inspection surface section (10c), which together with the transport plane (E) encloses an angle (w) between 15° and 45°, preferably between 18° and 25°.

2. The device according to claim 1, **characterised in that** the first magnetic force (F1) for aligning the swing top (2) is formed along a plane extending approximately vertically to the bottle longitudinal axis (LA).

3. The device according to claim 1 or 2, **characterised in that** the inspection device (9) for inspecting the seal (3) provided on a plug (2.2) of the swing top (2) is arranged below the guide rail (8) and/or laterally of the transport device (4).

4. The device according to one of claims 1 to 3, **characterised in that** at least one conveying device (6) is provided with means for conveying the swing top bottle (1) along the conveying direction (FR) and/or turning the swing top bottle (1) about its bottle longitudinal axis (LA).

5. The device according to one of claims 1 to 4, **characterised in that** the guide rail (8) is designed for turning the plug (2.2) during conveying along the conveying direction (FR) about a rotary axis extending approximately vertically to the conveying direction (FR).

6. The device according to one of claims 1 to 5, **characterised in that** on the inlet side there is provided a further inspection device (5) for determining the turning position of the swing top bottle (1) fed to the conveying device (6) relative to the conveying direction (FR).

7. The device according to one of claims 1 to 6, **characterised in that** the guide rail (8) comprises a plurality of further magnetisation means (7') received in the guide rail (8) along the conveying direction (FR) for generating a second magnetic force (F2) which serves to hold the plug (2.2) which is in contact with the track-shaped guiding surface (10).

8. The device according to one of claims 1 to 7, **characterised in that** the track-shaped guiding surface (10) of the guide rail (8) comprises at least one feed section (10a), a first turn-around section (10b), the inspection section (10c) as well as a second turn-around section (10d).

9. The device according to claim 8, **characterised in that** the feed section (10a) is shaped flat and/or extends obliquely to the transport plane (E) in conveying direction (FR).

10. The device according to claim 8 or 9, **characterised in that** the inspection section (10c) is shaped flat and the angle (w) enclosed with the transport plane (E) opens outwardly.

11. The device according to one of claims 8 to 10, **characterised in that** the first and second turn-around sections (10b, 10d) form a spiralled contact surface which spirals about an axis extending parallel to the conveying direction (FR).

12. The device according to one of claims 7 to 11, **characterised in that** the magnetisation means (7, 7') are formed by one or more individual magnets, in particular permanent magnets or electromagnets.

13. The device according to one of claims 1 to 12, **characterised in that** the guide rail (8) is arranged adjoined to the magnetisation means (7) in conveying direction (FR).

14. The device according to claim 13, **characterised in that** the conveying device (6) extends over the magnetisation means (7) and the adjoining guide rail (8) in conveying direction (FR).

## Revendications

1. Dispositif pour l'inspection de joints (3) de bouchons à étrier (2) sur des bouteilles munies d'un bouchon à étrier (1), comprenant un dispositif de transport (4) destiné à transporter les bouteilles munies d'un bouchon à étrier (1) dans au moins une direction de convoyage (FR) et un plan de transport (E) d'au moins un dispositif d'inspection (9) destiné à inspecter le joint (3) prévu sur un bouchon de fermeture (2.2) du bouchon à étrier (2), ainsi qu'un système d'aimantation (7) s'étendant le long de la direction de convoyage (FR), destiné à créer une première force magnétique (F) agissant sur le bouchon à étrier (2) de la bouteille munie d'un bouchon à étrier (1), au moyen de la première force magnétique (F), le bouchon à étrier (2) d'une bouteille munie d'un bouchon à étrier (1) étant latéralement soulevé et tenu dans un plan de maintien (E) s'écoulant approximativement à la parallèle du plan de transport (E), une coulisse (8) avec une surface de guidage (10) en forme de piste étant prévue, la surface de guidage (10) en forme de piste s'étendant dans la direction de convoyage (FR), montrant dans la direction du plan de transport (E) et servant de surface d'appui pour la face supérieure (2.2") plane du bouchon de fermeture (2.2) soulevé par l'intermédiaire de la première force magnétique (F1),
**caractérisé en ce que** la surface de guidage (10) en forme de piste comporte au moins un tronçon de surface d'inspection (10c) qui forme avec le plan de transport (E) un angle (w) compris entre 15° et 45°, de préférence entre 18° et 25°.

2. Dispositif selon la revendication 1, **caractérisé en ce que** la première force magnétique (F1) est conçue pour aligner le bouchon à étrier (2) le long d'un plan s'écoulant approximativement à la perpendiculaire de l'axe longitudinal de bouteille (LA).

3. Dispositif selon la revendication 1 ou 2, **caractérisé en ce que** le dispositif d'inspection (9) destiné à inspecter le joint (3) prévu sur un bouchon de fermeture (2.2) du bouchon à étrier (2) est placé en-dessous de la coulisse (8) et/ou latéralement du dispositif de transport (4).

4. Dispositif selon l'une quelconque des revendications 1 à 3, **caractérisé en ce qu'**il est prévu au moins un dispositif de convoyage (6) avec des moyens destinés à convoyer les bouteilles munies d'un bouchon à étrier le long de la direction de convoyage (FR) et/ou pour faire tourner les bouteilles munies d'un bouchon à étrier (1) autour de leur axe longitudinal de bouteille (LA).

5. Dispositif selon l'une quelconque des revendications 1 à 4, **caractérisé en ce que** la coulisse (8) est conçue pour faire tourner le bouchon de fermeture (2.2) pendant le convoyage le long de la direction de convoyage (FR) autour d'un axe de rotation s'écoulant approximativement à la perpendiculaire de la direction de convoyage (FR).

6. Dispositif selon l'une quelconque des revendications 1 à 5, **caractérisé en ce que** sur le côté arrivage, il est prévu un dispositif d'inspection (5) supplémentaire, destiné à déterminer la position en rotation en rapport à la direction de convoyage (FR) des bouteilles munies d'un bouchon à étrier (1) amenées au dispositif de transport (6).

7. Dispositif selon l'une quelconque des revendications 1 à 6, **caractérisé en ce que** la coulisse (8) comporte une pluralité de systèmes d'aimantation (7') supplémentaires logés dans la coulisse (8), le long de la direction de convoyage (FR), pour créer une deuxième force magnétique (F2) qui sert à tenir le bouchon de fermeture (2.2) adjacent à la surface de guidage (10) en forme de piste.

8. Dispositif selon l'une quelconque des revendications 1 à 7, **caractérisé en ce que** la surface de guidage (10) en forme de piste de la coulisse (8) comporte au moins tronçon d'aménage (10a), un premier tronçon de renversement (10b), le tronçon d'inspection (10c), ainsi qu'un second tronçon de renversement (10d).

9. Dispositif selon la revendication 8, **caractérisé en ce que** le tronçon d'aménage (10a) est conçu sous forme plane et/ou dans la direction de convoyage (FR), s'écoule en diagonale du plan de transport (E).

10. Dispositif selon la revendication 8 ou 9, **caractérisé en ce que** le tronçon d'inspection (10c) est conçu sous forme plane et **en ce que** l'angle (w) inclus par le plan de transport (E) s'ouvre sur l'extérieur.

11. Dispositif selon l'une quelconque des revendications 8 à 10, **caractérisé en ce que** le premier et le second tronçons de renversement (10b, 10d) forment une surface d'appui en spirale qui s'enroule autour d'un axe s'écoulant à la parallèle de la direction de convoyage (FR).

12. Dispositif selon l'une quelconque des revendications 7 à 11, **caractérisé en ce que** les systèmes d'aimantation (7, 7') sont formés d'un ou de plusieurs aimants individuels, notamment des aimants permanents ou des électroaimants.

13. Dispositif selon l'une quelconque des revendications 1 à 12, **caractérisé en ce que** la coulisse (8) est placée en se raccordant sur le système d'aimantation (7) dans direction de convoyage (FR).

14. Dispositif selon la revendication 13, **caractérisé en ce que** le dispositif de convoyage (6) s'étend par-dessus le système d'aimantation (7) et la coulisse (8) qui se raccorde sur celui-ci, dans la direction de convoyage (FR).
